# EUROPÄISCHE PATENTSCHRIFT

(11) **EP 1 549 700 B1**
(45) Veröffentlichungstag und Bekanntmachung des Hinweises auf die Patenterteilung: **01.08.2007**
(21) Anmeldenummer: 03748101.7
(22) Anmeldetag: 27.09.2003
(51) Int. Cl.: C08J 7/04, C09D 183/00, C09D 5/00

(54) **SCHICHTSYSTEM UND VERFAHREN ZU DESSEN HERSTELLUNG**
LAYER SYSTEM AND METHOD FOR PRODUCING THE SAME
SYSTEME STRATIFIE ET PROCEDE DE FABRICATION DUDIT SYSTEME

(30) Priorität: 01.10.2002 DE 10245725
(43) Veröffentlichungstag der Anmeldung: 06.07.2005
(73) Patentinhaber: Bayer MaterialScience AG, 51368 Leverkusen (DE)
(72) Erfinder: BIER, Peter, 47800 Krefeld (DE); CAPELLEN, Peter, 47803 Krefeld (DE)
(86) Internationale Anmeldenummer: PCT/EP2003/010770
(87) Internationale Veröffentlichungsnummer: WO 2004/031273

(56) Entgegenhaltungen:
- EP-A- 1 038 907
- WO-A-00/77100
- DE-A- 19 952 040

## Beschreibung

Die vorliegende Erfindung betrifft ein Schichtsystem umfassend ein Substrat (S), eine Kratzfestschicht (K) und eine Deckschicht (D) sowie ein Verfahren zur Herstellung dieses Schichtsystems.

Mit Hilfe des Sol-Gel-Prozesses ist es möglich, durch gezielte Hydrolyse und Kondensation von Alkoxiden, vorwiegend des Siliciums, Aluminiums, Titans und Zirkons, anorganisch-organische Hybridmaterialien herzustellen.

Durch diesen Prozess wird ein anorganisches Netzwerk aufgebaut. Über entsprechend derivatisierte Kieselsäureester können zusätzlich organische Gruppen eingebaut werden, die einerseits zur Funktionalisierung, andererseits zur Ausbildung definierter organischer Polymersysteme genutzt werden können. Dieses Werkstoffsystem bietet aufgrund der Vielzahl der Kombinationsmöglichkeiten sowohl der organischen als auch der anorganischen Komponenten sowie aufgrund der starken Beeinflussbarkeit der Produkteigenschaften durch den Herstellungsprozess eine sehr große Variationsbreite. Damit können insbesondere Beschichtungssysteme erhalten und auf unterschiedlichste Anforderungsprofile zugeschnitten werden.

Im Vergleich zu reinen anorganischen Materialien sind die erhaltenen Schichten immer noch relativ weich. Dies liegt darin begründet, dass die anorganischen Anteile im System zwar stark vernetzend wirken, aber auf Grund ihrer sehr geringen Größe die mechanischen Eigenschaften wie z. B. Härte und Abriebbeständigkeit nicht zum Tragen kommen. Durch sogenannte gefüllte Polymere können die günstigen mechanischen Eigenschaften der anorganischen Anteile voll ausgenutzt werden, da hierbei Partikelgrößen von mehreren Mikrometern vorliegen. Allerdings geht dabei die Transparenz der Materialien verloren, und Anwendungen im Bereich der Optik sind nicht mehr möglich. Die Verwendung von kleinen Teilchen in Nanometergröße aus SiO₂ (z. B. Aerosile^{®}), Kieselsol, Al₂O₃, Böhmit, Zirkondioxid, Titandioxid etc. zur Herstellung transparenter Schichten mit erhöhter Abriebfestigkeit ist zwar möglich, bei den einsetzbaren geringen Konzentrationen sind die erreichbaren Abriebfestigkeiten jedoch ähnlich denen der oben genannten Systeme. Die Obergrenze der Füllstoffmenge wird durch die hohe Oberflächenreaktivität der kleinen Teilchen bestimmt, welche Agglomerationen bzw. nicht tolerierbare Viskositätserhöhungen zur Folge hat.

DE 199 52 040 A1 beschreibt Schichtsysteme mit siliciumbasierten Kratzfestbeschichtungen (auf Basis von hydrolysierbaren Epoxysilanen) auf Polycarbonat sowie eine siliciumbasierte Deckschicht, welche aus einem Beschichtungssol enthaltend nanoskalige Feststoffteilchen besteht. Die Deckschicht wird durch Auftragen eines Beschichtungssols aus Tetraethoxysilan (TEOS) und Glycidyloxypropyltrimethoxysilan (GPTS) und Härten desselben bei einer Temperatur < 110°C erhalten. Das Beschichtungssol wird hergestellt, indem TEOS mit Ethanol als Lösungsmittel in HCl-saurer wässriger Lösung vorhydrolysiert und kondensiert wird. In das so vorhydrolysierte TEOS wird anschließend GPTS eingerührt und das Sol 5 Stunden bei 50°C gerührt. Nachteilig an dem in dieser Druckschrift beschriebenen Beschichtungssol ist dessen geringe Lagerstabilität (Topfzeit), in Folge deren das Beschichtungssol innerhalb weniger Tage nach seiner Herstellung weiterverarbeitet werden muss. Nachteilig an den in dieser Druckschrift beschriebenen Diffusionssperrschichtsystemen ist ferner, dass diese für den Einsatz in der Automobilverglasung unbefriedigende Ergebnisse nach dem Taber-Verschleißtest aufweisen.

Der Erfindung liegt die Aufgabe zugrunde, ein organisch modifiziertes anorganisches Schichtsystem bereit zu stellen, welches in seiner Härte deutlich über dem der im Stand der Technik beschriebenen Materialien liegt und über eine hohe optische Transparenz verfügt. Die Herstellung des Schichtsystems soll ferner mit stabilen Beschichtungsmittelzusammensetzungen mit ausreichender Lagerstabilität möglich sein, welche die Einstellung variabler oberflächenphysikalischer und oberflächenchemischer Eigenschaften wie z. B. Hydrophilie oder Hydrophobie in Kombination mit Oleophobie ermöglichen.

Diese Aufgabe wird erfindungsgemäß durch ein Schichtsystem gelöst, umfassend
(1) ein Substrat (S),
(2) eine Kratzfestschicht (K), erhältlich durch mindestens teilweises Aushärten eines Beschichtungsmittels enthaltend ein nach dem Sol-Gel-Verfahren hergestelltes Polykondensat auf Basis mindestens eines Silans und
(3) eine Deckschicht (D), erhältlich durch mindestens teilweises Aushärten eines Beschichtungsmittels erhältlich durch gemeinsame Hydrolyse von
   (a) einer oder mehreren Verbindungen der allgemeinen Formel I

      M(R')ₘ (I)

      worin M ein Element oder eine Verbindung ausgewählt aus der Gruppe bestehend aus Si, Ti, Zr, Sn, Ce, Al, B, VO, In und Zn ist, R' einen hydrolysierbaren Rest darstellt und m eine ganze Zahl von 2 bis 4 ist, gemeinsam mit
   (b) einer oder mehreren Verbindungen der allgemeinen Formel II

      R_{b}SiR'ₐ, (II)
   worin die Reste R' und R gleich oder verschieden sind, R' wie oben definiert ist, R eine Alkylgruppe, eine Alkenylgruppe, eine Arylgruppe oder eine Kohlenwasserstoffgruppe mit einem oder mehreren Halogengruppen, eine Epoxygruppe, eine Glycidyloxygruppe eine Aminogruppe, eine Mercaptogruppe eine Methacryloxygruppe oder eine Cyanogruppe darstellt und a und b unabhängig voneinander die Werte 1 bis 3 annehmen, wobei die Summe von a und b gleich vier ist.

Die erfindungsgemäßen Schichtsysteme zeichnen sich insbesondere durch ihre Deckschicht (D) aus, welche nach einem besonderen, nachstehend näher beschriebenen Herstellungsverfahren hergestellt werden. Das Schichtsystem zeichnet sich durch eine hervorragende Kratz- und Abriebfestigkeit aus. Besonders vorteilhaft und praktikabel bei der Herstellung des erfindungsgemäßen Schichtsystems ist, dass das für die Deckschicht (D) eingesetzte Beschichtungsmittel - anders als aus dem Stand der Technik bekannte Beschichtungsmittel - eine hohe Lagerstabilität (Topfzeit) aufweist und damit hervorragend verarbeitbar ist.

### A) Herstellung der Kratzfestschicht (K)

Die Herstellung der Kratzfestschicht (K) erfolgt durch Aufbringen eines Beschichtungsmittels auf ein Substrat (S), wobei das Beschichtungsmittel ein nach dem Sol-Gel-Verfahren hergestelltes Polykondensat auf Basis mindestens eines Silans umfasst, und zumindest teilweises Aushärten desselben. Die Herstellung derartiger Kratzfestschichten (K) auf einem Substrat (S) ist dem Fachmann grundsätzlich bekannt.

Die Auswahl der Substratmaterialien (S) zur Beschichtung ist nicht beschränkt. Vorzugsweise eignen sich die Zusammensetzungen zum Beschichten von Holz, Textilien, Papier, Steinwaren, Metallen, Glas, Keramik und Kunststoffen und dabei besonders zur Beschichtung von Thermoplasten, wie sie in Becker/Braun, Kunststofftaschenbuch, Carl Hanser Verlag, München, Wien 1992 beschrieben sind. Ganz besonders eignen sich die Zusammensetzungen zur Beschichtung von transparenten Thermoplasten und vorzugsweise von Polycarbonaten. Insbesondere Brillengläser, optische Linsen, Automobilscheiben und Platten können mit den erfindungsgemäß erhaltenen Zusammensetzungen beschichtet werden.

Die Kratzfestschicht (K) wird vorzugsweise in einer Dicke von 0,5 bis 30 µm ausgebildet. Zwischen Substrat (S) und Kratzfestschicht (K) kann ferner eine Primerschicht (P) ausgebildet werden.

Als Beschichtungsmittel für die Kratzfestschicht (K) kommen beliebige, nach dem Sol-Gel-Verfahren hergestellte Polykondensate auf Silanbasis in Betracht. Besonders geeignete Beschichtungsmittel für die Kratzfestschicht (K) sind insbesondere
A.1) Methylsilansysteme,
A.2) kieselsol-modifizierte Methylsilan-Systeme,
A.3) kieselsol-modifizierte Silylacrylat-Systeme,
A.4) mit anderen Nanoteilchen (insbesondere Böhmit) modifizierte Silylacrylat-Systeme und
A.5) cyclische Organosiloxan-Systeme.

Die vorgenannten Beschichtungsmittel für die Kratzfestschicht (K) werden im folgenden näher beschrieben:

### A.1) Methylsilansysteme

Als Beschichtungsmittel für die Kratzfestschicht (K) können beispielsweise bekannte Polykondensate auf Basis von Methylsilan eingesetzt werden. Bevorzugt werden Polykondensate auf Basis von Methyltrialkoxysilanen eingesetzt. Die Beschichtung des Substrats (S) kann beispielsweise dadurch erfolgen, dass eine Mischung aus mindestens einem Methyltrialkoxysilan, einem wasserhaltigen organischen Lösungsmittel und einer Säure aufgebracht, das Lösungsmittel verdampft und das Silan unter Bildung eines hoch vernetzten Polysiloxans unter Einfluss von Wärme ausgehärtet wird. Die Lösung des Methyltrialkoxysilans besteht vorzugsweise zu 60 bis 80 Gew.% aus dem Silan. Besonders geeignet sind Methyltrialkoxysilane, die rasch hydrolysieren, was insbesondere der Fall ist, wenn die Alkoxygruppe nicht mehr als vier Kohlenstoffatome enthält. Als Katalysatoren für die Kondensationsreaktion der durch Hydrolyse der Alkoxygruppen des Methyltrialkoxysilans entstandenen Silanolgruppen sind insbesondere starke anorganische Säuren wie Schwefelsäure und Perchlorsäure geeignet. Die Konzentration des sauren Katalysators beträgt vorzugsweise etwa 0,15 Gew.%, bezogen auf das Silan. Als anorganische Lösungsmittel für das aus Methyltrialkoxysilan, Wasser und Säure bestehende System sind Alkohole wie Methanol, Ethanol und Isopropanol oder Ätheralkohole wie Ethylglykol besonders geeignet. Vorzugsweise enthält die Mischung 0,5 bis 1 Mol Wasser pro Mol Silan. Die Herstellung, Auftragung und Aushärtung derartiger Beschichtungsmittel sind dem Fachmann bekannt und beispielsweise in den Druckschriften DE-OS 2 136 001, DE-OS 2 113 734 und US 3 707 397 beschrieben, auf welche hier ausdrücklich Bezug genommen wird.

### A.2) Kieselsol-modifizierte Methylsilan-Systeme

Als Beschichtungsmittel für die Kratzfestschicht (K) können ferner Polykondensate auf Basis von Methylsilan und Kieselsol eingesetzt werden. Besonders geeignete Beschichtungsmittel dieser Art sind nach dem Sol-Gel-Verfahren hergestellte Polykondensate aus im Wesentlichen 10 bis 70 Gew.% Kieselsol und 30 bis 90 Gew.% eines teilweise kondensierten Organoalkoxysilans in einem wässrig/organischen Lösungsmittelgemisch. Besonders geeignete Beschichtungsmittel sind die in der Druckschrift US 5 503 935 beschriebenen hitzehärtbaren, grundierungsfreien Silicon-Hartüberzugs-Zusammensetzungen, welche, bezogen auf das Gewicht,
(A) 100 Teile Harzfeststoffe in Form einer Silicon-Dispersion in wässrig/organischen Lösungsmittel mit 10 bis 50 Gew.% Feststoffen und bestehend im wesentlichen aus 10 bis 70 Gew.% kolloidalem Siliciumdioxid und 30 bis 90 Gew.% eines Teilkondensates eines Organoalkoxysilans und
(B) 1 bis 15 Teile eines Adhäsions-Förderers, ausgewählt aus
   (i) einem acrylierten Polyurethan-Adhäsionsförderer mit einem *M̅*ₙ von 400 bis 1.500 und ausgewählt aus einem acrylierten Polyurethan und einem methacrylierten Polyurethan und
   (ii) einem Acrylpolymer mit reaktionsfähigen oder interaktiven Stellen und einem *M̅*ₙ von mindestens 1.000.
   umfassen.

Organoalkoxysilane, die bei der Herstellung der Dispersion der hitzehärtbaren, grundierungsfreien Silicon-Hartüberzugs-Zusammensetzungen in wässrig/ organischem Lösungsmittel eingesetzt werden können, fallen vorzugsweise unter die Formel

(R)ₐSi(OR¹)₄₋ₐ,

worin R ein einwertiger C₁₋₆-Kohlenwasserstoffrest, insbesondere ein C₁₋₄-Alkylrest, R¹ ein R- oder ein Wasserstoffrest und a eine ganze Zahl von 0 bis einschließlich 2 ist. Vorzugsweise ist das Organoalkoxysilan der vorgenannten Formel Methyltrimethoxysilan, Methyltrihydroxysilan oder eine Mischung davon, die ein Teilkondensat bilden kann.

Die Herstellung, Eigenschaften und Aushärtung derartiger hitzehärtbarten, grundierungsfreien Silicon-Hartüberzugs-Zusammensetzungen sind dem Fachmann bekannt und beispielsweise in der Druckschrift US 5 503 935 ausführlich beschrieben, auf deren Inhalt hier ausdrücklich Bezug genommen wird.

Als Beschichtungsmittel für die Kratzfestschicht (K) können ferner Polykondensate auf Basis von Methylsilanen und Kieselsol mit einem in einem Wasser/Alkohol-Gemisch dispergierten Feststoffanteil von 10 bis 50 Gew.% eingesetzt werden. Die in dem Gemisch dispergierten Feststoffe umfassen Kieselsol, insbesondere in einer Menge von 10 bis 70 Gew.%, und ein von Organotrialkoxysilanen abgeleitetes Teilkondensat, vorzugsweise in einer Menge von 30 bis 90 Gew.%, wobei das Teilkondensat vorzugsweise die Formel R'Si(OR)₃ aufweist, worin R' ausgewählt ist aus der Gruppe, bestehend aus Alkylresten mit 1 bis 3 Kohlenstoffatomen und Arylresten mit 6 bis 13 Kohlenstoffatomen, und R ausgewählt ist aus der Gruppe, bestehend aus Alkylresten mit 1 bis 8 Kohlenstoffatomen und Arylresten mit 6 bis 20 Kohlenstoffatomen. Die Beschichtungszusammensetzung weist vorzugsweise einen alkalischen pH-Wert, insbesondere einen pH-Wert von 7, 1 bis etwa 7,8 auf, was durch eine Base erreicht wird, die bei der Aushärtungstemperatur des Beschichtungsmittels flüchtig ist. Die Herstellung, Eigenschaften und Aushärtung derartiger Beschichtungsmittel sind dem Fachmann grundsätzlich bekannt und beispielsweise in der Druckschrift US 4 624 870 beschrieben, auf deren Inhalt hier ausdrücklich Bezug genommen wird.

Die zuvor genannten und in der Druckschrift US 4 624 870 beschriebenen Beschichtungsmittel können in Kombination mit einem geeigneten Primer eingesetzt, wobei der Primer eine Zwischenschicht zwischen Substrat (S) und Kratzfestschicht (K) bildet. Geeignete Primerzusammensetzungen sind beispielsweise Polyacrylat-Primer. Geeignete Polyacrylat-Primer sind solche auf Basis von Polyacrylsäure, Polyacrylestern und Copolymeren von Monomeren mit der allgemeinen Formel 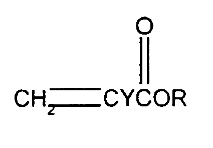 worin Y für H, Methyl oder Ethyl steht und R eine C₁₋₁₂-Alkylgruppe bedeutet. Das Polyacrylatharz kann thermoplastisch oder thermosetting sein und ist vorzugsweise in einem Lösungsmittel gelöst. Als Acrylatharzlösung kann beispielsweise eine Lösung aus Polymethylmethacrylat (PMMA) in einem Lösungsmittelgemisch aus einem schnell verdampfenden Lösungsmittel wie Propylenglycolmethylether und einem langsamer verdampfenden Lösungsmittel wie Diacetonalkohol eingesetzt werden. Besonders geeignete Acrylat-Primer-Lösungen sind thermoplastische Primerzusammensetzungen enthaltend
(A) Polyacrylharz und
(B) 90 bis 99 Gewichtsteile eines organischen Lösungsmittelgemischs, enthaltend
   (i) 5 bis 25 Gew.% eines starken Lösungsmittels mit einem Siedepunkt von 150 bis 200°C unter Normalbedingungen, in dem (A) frei löslich ist und
   (ii) 75 bis 95 Gew.% eines schwächeren Lösungsmittels mit einem Siedepunkt von 90 bis 150°C bei Normalbedingungen, worin (A) löslich ist.

Die Herstellung, Eigenschaften und Trocknung der letztgenannten thermoplastischen Primerzusammensetzungen sind dem Fachmann bekannt und beispielsweise in der Druckschrift US 5 041 313 ausführlich beschrieben, auf deren Inhalt hier ausdrücklich Bezug genommen wird. Wie eingangs bereits erwähnt, wird die Primer-Schicht zwischen Substrat (S) und Kratzfestschicht (K) angeordnet und dient der Haftvermittlung zwischen beiden Schichten.

Weitere Beschichtungsmittel für die Kratzfestschicht (K) auf Basis von Methylsilan und Kieselsol sind beispielsweise in den Druckschriften EP 0 570 165 A2, US 4 278 804, US 4 495 360, US 4 624 870, US 4 419 405, US 4 374 674 und US 4 525 426 beschrieben, auf deren Inhalt hier ausdrücklich Bezug genommen wird.

### A.3) Kieselsol-modifizierte Silylacrylat-Systeme

Als Beschichtungsmittel für die Kratzfestschicht (K) können ferner Polykondensate auf Basis von Silylacrylat eingesetzt werden. Neben Silylacrylat enthalten diese Beschichtungsmittel vorzugsweise kolloidale Kieselerde (Kieselsol). Als Silylacrylate kommen insbesondere acryloxy-funktionelle Silane der allgemeinen Formel 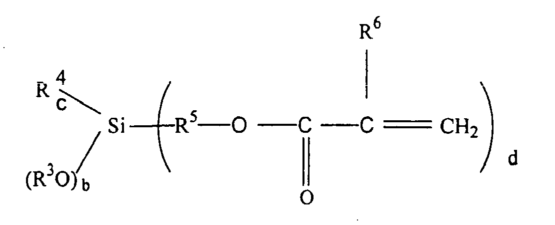 in welcher R³ und R⁴ gleiche oder verschiedenartige einwertige Kohlenwasserstoffreste sind, R⁵ ein zweiwertiger Kohlenwasserstoffrest mit 2 bis 8 Kohlenstoffatomen ist, R⁶ Wasserstoff oder einen einwertigen Kohlenwasserstoffrest bedeutet, der Index b eine ganze Zahl mit einem Wert von 1 bis 3, der Index c eine ganze Zahl mit einem Wert von 0 bis 2, und der Index d eine ganze Zahl mit einem Wert von (4 - b - c) ist, oder
glycidoxy-funktionelle Silane der allgemeinen Formel 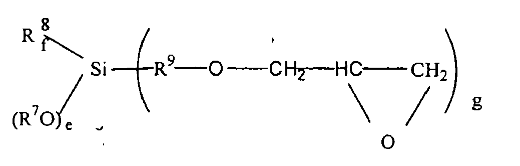 worin R⁷ und R⁸ die gleichen oder verschiedenartige einwertige Kohlenwasserstoffreste sind, R⁹ einen zweiwertigen Kohlenwasserstoffrest mit 2 bis 8 Kohlenstoffatomen bedeutet, der Index e eine ganze Zahl mit einem Wert von 1 bis 3, der Index f eine ganze Zahl mit einem Wert von 0 bis 2, und der Index g eine ganze Zahl mit einem Wert von (4-e-f) ist, und Mischungen davon, in Betracht. Die Herstellung und Eigenschaften dieser acryloxy-funktionellen Silane und glycidoxy-funktionellen Silane sind dem Fachmann grundsätzlich bekannt und beispielsweise in der DE 31 26 662 A1 beschrieben, auf welche hier ausdrücklich Bezug genommen wird. Besonders geeignete acryloxy-funktionelle Silane sind beispielsweise 3-Methacryloxypropyltrimethoxysilan, 3-Acryloxypropyltrimethonxysilan, 2-Methacryloxyäthyltrimethoxysilan, 2-Acryloxyäthyltrimethoxysilan, 3-Methacryloxypropyltriäthoxy-silan, 3-Acryloxypropyltriäthoxysilan, 2-Methacryloxyäthyltriäthoxysilan und 2-Acryloxyäthyltriäthoxysilan. Besonders geeignete glycidoxy-funktionelle Silane sind beispielsweise 3-Glycidoxypropyltrimethoxysilan, 2-Glycidoxy-äthyltrimethoxysilan, 3-Glycidoxypropyltriäthoxysilan und 2-Glycidoxyäthyltri-äthoxysilan. Diese Verbindungen sind ebenfalls in der DE 31 26 662 A1 beschrieben. Als weiteren Bestandteil können diese Beschichtungsmittel weitere Acrylatverbindungen, insbesondere Hydroxyacrylate enthalten. Einsetzbare weitere Acrylatverbindungen sind beispielsweise 2-Hydroxyäthylacrylat, 2-Hydroxyäthyl-methacrylat, 3-Hydroxypropylacrylat, 3-Hydroxypropylmethacrylat, 2-Hydroxy-3-methaeryloxypropylacrylat, 2-Hydroxy-3-acryloxypropylacrylat, 2-Hydroxy-3-methacryloxypropylmethacrylat, Diäthylenglykoldiacrylat, Triäthylenglykoldiacrylat, Tetraäthylenglykoldiacrylat, Trimethylolpropantriacrylat, Tetrahydrofurfuryl-methacrylat und 1,6-Hexandioldiacrylat. Besonders bevorzugte Beschichtungsmittel dieser Art sind solche, die 100 Gewichtsteile kolloidale Kieselerde, 5 bis 500 Gewichtsteile Silylacrylat und 10 bis 500 Gewichtsteile weiteres Acrylat enthalten. In Verbindung mit einer katalytischen Menge eines Photoinitiators können derartige Beschichtungsmittel nach dem Auftragen auf ein Substrat (S) durch UV-Strahlung unter Ausbildung einer Kratzfestschicht (K), wie in der DE 31 26 662 A1 beschrieben, ausgehärtet werden. Die Beschichtungsmittel können ferner übliche Additive enthalten. Besonders geeignet sind ferner die in der US 5 990 188 beschriebenen, durch Bestrahlung härtbaren Kratzfestbeschichtungen, die neben den vorgenannten Bestandteilen noch einen UV-Absorber wie Triazin oder Dibenzylresorcinol-Derivate enthalten. Weitere Beschichtungsmittel auf Basis von Silylacrylaten und Kieselsol sind in den Druckschriften US 5 468 789, US 5 466 491, US 5 318 850, US 5 242 719 und US 4 455 205 beschrieben, auf deren Inhalt hier ausdrücklich Bezug genommen wird.

### A.4) Mit anderen Nanoteilchen modifizierte Silylacrylat-Systeme

Als Beschichtungsmittel für die Kratzfestschicht (K) können ferner Polykondensate auf Basis von Silylacrylaten eingesetzt werden, die als weiteren Bestandteil nanoskalige AlO(OH)-Teilchen, insbesondere nanoskalige Böhmit-Teilchen, enthalten. Insbesondere kommen Beschichtungsmittel in Betracht, die Methacryloxypropyltrimethoxysilan und AlO(OH)-Nanopartikel enthalten. Derartige Beschichtungsmittel sind beispielsweise in den Druckschriften WO 98/51747 A1, WO 00/14149 A1, DE 197 46 885, US 5 716 697 und WO 98/04604 A1 beschrieben, auf deren Inhalt hier ausdrücklich Bezug genommen wird. Durch Zusatz von Photoinitiatoren können diese Beschichtungsmittel nach dem Auftragen auf ein Substrat (S) durch UV-Strahlen unter Ausbildung einer Kratzfestschicht (K) gehärtet werden.

### A.5) Cyclische Organosiloxan-Systeme

Als Beschichtungsmittel für die Kratzfestschicht (K) können ferner Polykondensate auf Basis von multifunktionellen cyclischen Organosiloxanen eingesetzt werden. Als derartige multifunktionelle, cyclische Organosiloxane kommen insbesondere solche der folgenden Formel 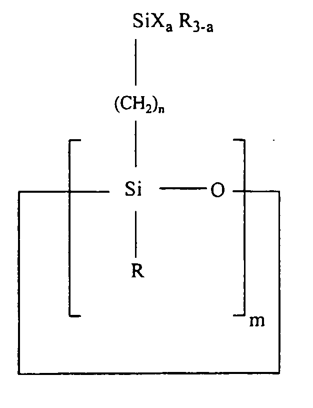 mit m = 3 bis 6, vorzugsweise 3 bis 4, n = 2 bis 10, vorzugsweise 2 bis 5, besonders bevorzugt 2, R = C₁ bis C₈-Alkyl und/oder C₆ bis C₁₄-Aryl, vorzugsweise C₁ bis C₂-Alkyl in Betracht, wobei n und R innerhalb des Moleküls gleich oder ungleich, bevorzugt gleich, sein können und wobei die weiteren Reste die folgende Bedeutung haben:
(A) für X = Halogen, d. h. Cl, Br, I und F, bevorzugt Cl mit a = 1 bis 3 oder X = OR', OH mit a = 1 bis 2, mit R' = C₁ bis C₈-Alkyl, bevorzugt C₁ bis C₂-Alkyl, oder
(B) für X = (OSiR₂)ₚ[(CH₂)ₙSiYₐR₃₋ₐ] mit a = 1 bis 3, wobei a innerhalb des Moleküls gleich oder ungleich, bevorzugt gleich, sein kann,
   p = 0 bis 10, vorzugsweise p = 0 und
   Y = Halogen, OR', OH, bevorzugt Cl, OR', OH mit R' = C₁ bis C₈-Alkyl, bevorzugt C₁ bis C₂-Alkyl, oder
(C) X = (OSiR₂)ₚ((CH₂)ₙSiR₃₋ₐ[(CH₂)ₙSiYₐR₃₋ₐ]ₐ] mit a = 1 bis 3, wobei a innerhalb des Moleküls gleich oder ungleich, bevorzugt gleich, sein kann,
   p = 0 bis 10, vorzugsweise p = 0 und
   Y = Halogen, OR', OH, bevorzugt Cl, OR', OH mit R' = C₁ bis C₈-Alkyl, bevorzugt C₁ bis C₂-Alkyl, eingesetzt werden.

Besonders geeignet sind Verbindungen mit n = 2, m = 4, R = Methyl und X = OH, OR' mit R' = Methyl, Ethyl und a = 1. Die Herstellung und Eigenschaften derartiger multifunktioneller cyclischer Organosiloxane sowie deren Einsatz in Kratzfestbeschichtungsmitteln sind dem Fachmann grundsätzlich bekannt und beispielsweise in der Druckschrift DE 196 03 241 C1 beschrieben, auf deren Inhalt hier ausdrücklich Bezug genommen wird. Weitere Beschichtungsmittel auf Basis von cyclischen Organosiloxanen sind beispielsweise in den Druckschriften WO 98/52992, DE 197 11 650, WO 98/25274 und WO 98/38251 beschrieben, auf deren Inhalt hier ebenfalls ausdrücklich Bezug genommen wird.

Zur Einstellung der rheologischen Eigenschaften der Kratzfestschicht-Zusammensetzungen können gegebenenfalls inerte Lösungsmittel oder Lösungsmittelgemische auf einer beliebigen Stufe der Herstellung zugesetzt werden. Vorzugsweise handelt es sich bei diesen Lösungsmitteln um die für die Deckschicht-Zusammensetzung beschriebenen Lösungsmittel.

Die Kratzfestschicht-Zusammensetzungen können ferner übliche Additive enthalten. Übliche Additive sind beispielsweise die nachstehend unter Punkt B) für die Deckschicht (D) beschriebenen Addtitive.

Das Auftragen und Härten der Kratzfestschicht-Zusammensetzung erfolgt nach Antrocknung vorzugsweise thermisch bei 50 bis 200°C, bevorzugt 70 bis 180°C und insbesondere 110 bis 130°C. Die Aushärtzeit sollte unter diesen Bedingungen weniger als 120, bevorzugt weniger 90, insbesondere weniger als 60 Minuten betragen.

Die Schichtdicke der gehärteten Kratzfestschicht (K) sollte 0,5 bis 30 µm, bevorzugt 1 bis 20 µm und insbesondere 2 bis 10 µm betragen.

### B) Herstellung der Deckschicht (D)

Die Herstellung der Deckschicht (D) erfolgt durch Aufbringen und mindestens teilweises Aushärten eines Deckschicht-Beschichtungsmittels auf die zumindest teilweise ausgehärtete Kratzfestschicht (K).

Das Beschichtungsmittel für die Deckschicht (D) im erfindungsgemäßen Schichtsystem ist erhältlich durch gemeinsame Hydrolyse der eingangs näher beschriebenen Verbindungen der Formeln (I) und (II).

Überraschend wurde festgestellt, dass durch die vorgesehene gemeinsame Hydrolyse der Verbindungen der Formeln I und II die Lagerstabilität (Topfzeit) des Beschichtungsmittels für die Deckschicht (D) erheblich verbessert wird.

Die Hydrolyse der Verbindungen der Formeln I und II wird vorzugsweise in Gegenwart von mindestens 0,6 Mol Wasser, insbesondere 0,8 bis 2,0 Mol Wasser, bezogen auf 1 Mol hydrolysierbare Reste R', durchgeführt. Gemäß einer weiteren bevorzugten Ausführungsform der Erfindung wird eine vollständige Hydrolyse durch Einsatz mindestens einer äquimolaren Menge Wasser, bezogen auf die hydrolysierbaren Reste, durchgeführt.

Die Verbindungen der Formeln I und II können in beliebigen Mengen eingesetzt werden. Vorzugsweise wird die Verbindung der Formel II in einer Menge von weniger als 0,7 Mol, insbesondere weniger als 0,5 Mol, bezogen auf 1 Mol der Verbindung der Formel I, eingesetzt.

Die Hydrolyse wird vorzugsweise in Gegenwart von Säuren, insbesondere wässriger Salzsäure, durchgeführt. Besonders geeignet ist ein pH-Wert des Reaktionsgemisches von < 6, insbesondere von 2,0 bis 5,0.

Die Hydrolysereaktion verläuft in der Regel leicht exotherm und wird vorzugsweise durch Erwärmen auf 30 bis 40°C unterstützt. Nach erfolgter Hydrolyse wird das Reaktionsprodukt vorzugsweise auf Raumtemperatur abgekühlt und einige Zeit, insbesondere 1 bis 3 Stunden, bei Raumtemperatur gerührt. Die erhaltene Beschichtungszusammensetzung wird vorzugsweise bei Temperaturen <10°C, insbesondere bei einer Temperatur von etwa 4°C, aufbewahrt.

Alle Temperaturangaben schließen eine Abweichung von ± 2°C ein. Unter Raumtemperatur wird eine Temperatur von 20 bis 23°C verstanden.

Das Beschichtungssol für die Deckschicht (D) wird hergestellt aus 100 Teilen einer Verbindung der Formel 1 und/oder eines Hydrolyseproduktes daraus und einer Verbindung der Formel II und/oder eines Hydrolyseproduktes daraus, wobei die Menge der Verbindung II, bezogen auf die 100 Teile der Verbindung I, weniger als 100 Teile, vorzugsweise weniger als 70 Teile, insbesondere weniger als 50 Teile beträgt oder auch vollständig entfällt. Die applikationsfertige Deckschicht-Beschichtungszusammensetzung besitzt vorzugsweise einen Feststoffgehalt von 0,2 bis 15 Gew.%, insbesondere von 1 bis 12 Gew.%. Weitere bevorzugte Feststoffgehalte der Deckschicht-Zusammensetzung sind 0,2 bis 5 Gew.%, insbesondere 0,5 bis 3 %.

Vorzugsweise handelt es ich bei der Verbindung der Formel I um eine Verbindung

M(R)ₘ

worin M für a) Si⁺⁴, Ti ⁺⁴, Z ⁺⁴ Sn⁺⁴, Ce ⁺⁴ oder b) Al⁺³, B⁺³, VO⁺³, In⁺³ oder c) Zn⁺² steht, R einen hydrolysierbaren Rest darstellt und m im Fall von vierwertiger Elemente M [Fall a)] 4, im Fall dreiwertiger Elemente oder Verbindungen M [Fall b)] 3, und im Fall zweiwertiger Elemente [Fall c)] 2 ist. Bevorzugte Elemente für M sind Si⁺⁴, Ti⁺⁴, Ce⁺⁴ und Al⁺³ besonders bevorzugt ist Si⁺⁴.

Beispiele für die hydrolysierbaren Reste sind Halogen (F, Cl, Br und I, insbesondere Cl und Br), Alkoxy (insbesondere C₁₋₄-Alkoxy wie z. B. Methoxy, Ethoxy, n-Propoxy, i-Propoxy und n-Butoxy, i-Butoxy, sec-Butoxy oder tert.-Butoxy), Aryloxy (insbesondere C₆₋₁₀-Aryloxy, z. B. Phenoxy), Acyloxy (insbesondere C₁₋₄-Acyloxy wie z. B. Acetoxy und Propionyloxy) und Alkylcarbonyl (z. B. Acetyl). Besonders bevorzugte hydrolysierbare Reste sind Alkoxygruppen, insbesondere Methoxy und Ethoxy.

Konkrete Beispiele für Verbindungen der Formel I, die eingesetzt werden können, sind im folgenden angegeben, wobei diese jedoch keine Beschränkung der einsetzbaren Verbindungen der Formel I darstellen sollen.

Si(OCH₃)₄, Si(OC₂H₅)₄, Si(O-n- oder i-C₃H₇)₄,
Si(OC₄H₉)₄, SiCl4, HSiCl₃, Si(OOCCH₃)₄,
Al(OCH₃)₃, Al(OC₂H₅)₃, Al(O-n-C₃H₇)₃,
Al(O-i-C₃H₇)₃, Al(OC₄H₉)₃, Al(O-i-C₄H₉)₃,
Al(O-sek-C₄H₉)₃, AlCl3, AlCl(OH)₂, Al(OC₂H₄OC₄H₉)₃,
TiCl₄, Ti(OC₂H₅)4, Ti(OC₃H₇)₄,
Ti(O-i-C₃H₇)₄, Ti(OC₄H₉)₄, Ti(2-ethylhexoxy)₄ ;
ZrCl₄, Zr(OC₂H₅)₄, Zr(OC₃H₇)₄, Zr(O-i-C₃H₇)₄, Zr(OC₄H₉)₄,
ZrOCl₂, Zr(2-ethylhexoxy)₄
sowie Zr-Verbindungen, die komplexierende Reste aufweisen wie z. B. β-Diketon- und Methacryl-Reste,
BCl₃, B(OCH₃)₃, B(OC₂H₅)₃,
SnCl₄, Sn(OCH₃)₄,
Sn(OC₂H₅)₄,
VOCl₃, VO(OCH₃)₃,
Ce(OC₂H₅)₄, Ce(OC₃H₄)₄, Ce(OC₄H₉), Ce(O-i-C₃H₇)₄, Ce(2-ethylhexoxy)₄,
Ce(SO₄)₂, Ce(ClO₄)₄, CeF₄, CeCl₄, CeAc₄,
In(CH₃COO)₃, In[CH₃COCH = C(O-)CH₃]₃,
InBr₃, [(CH₃)₃CO]₃In, InCl₃, InF₃,
[(CH₃I₂)CHO]₃In, InI₃, m(NO₃)₃, In(ClO₄)₃, In₂ (SO₄)₃, In₂S₃,
(CH₃COO)₂Zn, [CH₃COCH = C(O-)CH₃]₂Zn,
ZnBr₂, ZnCO₃ 2 Zn(OH)₂ x H₂O, ZnCl₂,
Zinkcitrat, ZnF₂, ZnI, Zn(NO₃)₂ H₂O, ZnSO₄ H₂O.

Besonders bevorzugt werden Verbindungen SiR₄ eingesetzt, wobei die Reste R gleich oder verschieden sein können und für eine hydrolysierbare Gruppe stehen, bevorzugt für eine Alkoxygruppe mit 1 bis 4 Kohlenstoffatomen, insbesondere für Methoxy, Ethoxy, n-Propoxy, i-Propoxy, n-Butoxy, i-Butoxy, sec-Butoxy oder tert.-Butoxy.

Ganz besonders bevorzugt ist ein Tetraalkoxysilan insbesondere Tetraethoxysilan (TEOS).

Vorzugsweise handelt es ich bei der Verbindung der Formel II um eine Verbindung

R_{b}SiR'ₐ, II

worin die Reste R und R' gleich oder verschieden sind (vorzugsweise identisch), R' für eine hydrolysierbare Gruppe (vorzugsweise C₁₋₄ Alkoxy und insbesondere Methoxy und Ethoxy) stehen und R für eine Alkylgruppe, eine Alkenylgruppe, eine Arylgruppe oder eine Kohlenwasserstoffgruppe mit einem oder mehreren Halogengruppen, eine Epoxygruppe, eine Glycidyloxygruppe eine Aminogruppe, eine Mercaptogruppe eine Methacryloxygruppe oder eine Cyanogruppe stehen.
a kann die Werte 1 bis 3 und
b ebenfalls die Werte 1 bis 3
annehmen, wobei die Summe a + b gleich vier ist.

Beispiele für Verbindungen der Formel II sind:
Trialkoxysilane, Triacyloxysilane und Triphenoxysilane solche wie Methyltrimethoxysilan, Methyltriethoxysilan, Methyltrimethoxyethoxysilan, Methyltriacetoxysilan, Methyltributoxysilan, Ethyltrimethoxysilan, Ethyltriethoxysilan, Vinyltrimethoxysilan, Vinyltriethoxysilan, Vinyltriacetoxysilan, Vinyltrimethoxyethoxysilan, Phenyltrimethoxysilan, Phenyltriethoxysilan, Phenyltriacetoxysilan, γ-Chlorpropyltrimethoxysilan, γ-Chlorpropyltriethoxysilan, γ-Chlorpropyltriacetoxysilan, 3,3,3-Trifluorpropyltrimethoxysilan, γ-Methacryloxypropyltrimethoxysilan, γ-Aminopropyltrimethoxysilan, γ-Mercaptopropyltrimethoxysilan, γ-Mercaptopropyltriethoxysilan, N-β-(aminoethyl)- γ-aminopropyltrimethoxysilan, β-Cyanoethyltriethoxysilan, Methyltriphenoxysilan, Chlormethyltrimethoxysilan, Chlormethyltriethoxysilan, Glycidoxymethyltrimethoxysilan, Glycidoxymethyltriethoxysilan, α-Glycidoxyehtyltrimethoxysilan, α-Glycidoxyehtyltriethoxysilan, β-Glycidoxyethyltrimethoxysilan, β-Glycidoxyethyltriethoxysilan, α-Glycidoxypropyltrimethoxysilan, α-Glycidoxypropyltriethoxysilan, β-Glycidoxypropyltrimethoxysilan, β-Glycidoxypropyltriethoxysilan, γ-Glycidoxypropyltrimethoxysilan, γ-Glycidoxypropyltriethoxysilan, γ-Glycidoxypropyltripropoxysilan, γ-Glycidoxypropyltributoxysilan, γ-Glycidoxypropyltrimethoxyethoxysilan, γ-Glycidoxypropyltriphenoxysilan, α-Glycidoxybutyltrimethoxysilan, α-Glycidoxybutyltriethoxysilan, β-Glycidoxybutyltrimethoxysilan, β-Glycidoxybutyltriethoxysilan, γ-Glycidoxybutyltrimethoxysilan, γ-Glycidoxybutyltriethoxysilan, δ-Glycidoxybutylrimethoxysilan, δ-Glycidoxybutyltriethoxysilan, (3,4-Epoxycyclohexyl)methyltrimethoxysilan, (3,4-Epoxycyclohexyl)methyltriethoxysilan, β-(3,4-Epoxycyclohexyl)ethyltrimethoxysilan, β-(3,4-Epoxycyclohexyl)ethyltriethoxysilan, β-(3,4-Epoxycyclohexyl)ethyltripropoxysilan, β-(3,4-Epoxycyclohexyl)ethyltributoxysilan, β-(3,4-Epoxycyclohexyl)ethyldimethoxyethoxysilan, β-(3,4-Epoxycyclohexyl)ethyltriphenoxysilan, γ-(3,4-Epoxycyclohexyl)propyltrimethoxysilan, γ-(3,4-Epoxycyclohexyl)propyltriethoxysilan, δ-(3,4-Epoxycyclohexyl)butyltrimethoxysilan, δ-(3,4-Epoxycyclohexyl)butyltriethoxysilan und Hydrolyseprodukte daraus und Dialkoxysilane und Diacyloxysilane wie z. B. Dimethyldimethoxysilan, Phenylmethyldimethoxysilan, Dimethyldiethoxysilan, Phenylmethyldiethoxysilan, γ-Chlorpropylmethyldimethoxysilan, γ-Chlorpropylmethyldiethoxysilan, Dimethyldiacetoxysilan, γ-Methacryloxypropylmethyldimethoxysilan, γ-Methacryloxypropylmethyldiethoxysilan, γ-Mercaptopropylmethyldimethoxysilan, γ-Mercaptopropylmethyldiethoxysilan, γ-Aminopropylmethyldimethoxysilan, γ-Aminopropylmethyldiethoxysilan, Methylvinyldimethoxysilan, Methylvinyldiethoxysilan, Glycidoxymethylmethyldimethoxysilan, Glycidoxymethylmethyldiethoxysilan, α-Glycidoxyethylmethyldimethoxysilan, α-Glycidoxyethylmethyldiethoxysilan, β-Glycidoxyethylmethyldimethoxysilan, β-Glycidoxyethylmethyldiethoxysilan, α-Glycidoxypropylmethyldimethoxysilan, α-Glycidoxypropylmethyldiethoxysilan, β-Glycidoypropylmethyldimethoxysilan, β-Glycidoxypropylmethyldiethoxysilan, γ-Glycidoxypropylmethyldimethoxysilan, γ-Glycidoxypropylmethyldiethoxysilan, γ-Glycidoxypropylmethyldipropoxysilan, γ-Glycidoxypropylmethyldibutoxysilan, γ-Glycidoxypropylmethyldimethoxyethoxysilan, γ-Glycidoxypropylmethyldiphenoxysilan, γ-Glycidoxypropylethyldimethoxysilan, γ-Glycidoxypropylethyldiethoxysilan, γ-Glycidoxypropylethyldipropoxysilan, γ-Glycidoxypropylvinyldimethoxysilan, γ-Glycidoxypropylvinyldiethoxysilan, γ-Glycidoxypropylphenyldimethoxysilan, γ-Glycidoxypropylphenyldiethoxysilan, Produkte und Hydrolyseprodukte daraus.

Diese Produkte können einzeln oder als Mischung von zwei oder mehreren verwendet werden.

Bevorzugte Verbindungen der Formel II sind Methyltrialkoxysilan, Dimethyldialkoxysilan, Glycidyloxypropyltrialkoxysilan und/oder Methacryloxypropyltrimethoxysilan. Besonders bevorzugte Verbindungen der Formel II sind Glycidyloxypropyltrimethoxysilan (GPTS), Methyltriethoxysilan (MTS) und/oder Methacryloxypropyltrimethoxysilan (MPTS).

Zur Einstellung der rheologischen Eigenschaften der Zusammensetzungen können gegebenenfalls Wasser und/oder inerte Lösungsmittel oder Lösungsmittelgemische auf einer beliebigen Stufe der Herstellung, insbesondere bei der Hydrolyse, zugesetzt werden. Vorzugsweise handelt es sich bei diesen Lösungsmitteln um bei Raumtemperatur flüssige Alkohole, die im übrigen auch bei der Hydrolyse der bevorzugt eingesetzten Alkoxide entstehen. Vorzugsweise wird die Hydrolyse zur Herstellung des Beschichtungsmittels für die Deckschicht (D) in Gegenwart eines Alkohols mit einem Siedepunkt unter 120°C und/oder Alkoxyalkohols als Lösungsmittel durchgeführt. Besonders bevorzugte Alkohole sind C₁₋₈ Alkohole, insbesondere Methanol, Ethanol, n-Propanol, i-Propanol, n-Butanol, i-Butanol, tert.Butanol, n-Pentanol, i-Pentanol, n-Hexanol, n-Octanol. Ebenfalls bevorzugt sind C₁₋₆-Glykolether, insbesondere n-Butoxyethanol. Besonders geeignet als Lösungsmittel ist Isopropanol, Ethanol, Butanol und/oder Wasser.

Weiter können die Zusammensetzungen übliche Additive enthalten wie z. B. Farbstoffe, Verlaufsmittel, UV-Stabilisatoren, IR-Stabilisatoren, Füllstoffe, Photoinitiatoren, Photosensibilisatoren (falls eine photochemische Härtung der Zusammensetzung beabsichtigt ist) und/oder thermische Polymerisations-Katalysatoren. Verlaufsmittel sind insbesondere solche auf Basis von polyethermodifizierten Polydimethylsiloxanen. Es hat sich als besonders vorteilhaft erwiesen, wenn die Lackzusammensetzungen Verlaufsmittel in einer Menge von etwa 0,005 bis 2 Gew.% enthält. Zur Applikation des Beschichtungsmittels für die Deckschicht (D) ist ferner vorteilhaft, wenn das Hydrolysat der Verbindungen der Formeln I und II mit Alkoholen und/oder Alkoxyalkoholen auf eine Konzentration an Beschichtungsmittel von 0,02 bis 10 Gew.%, insbesondere von 0,5 bis 5 Gew.%, verdünnt wird.

Das Auftragen des so hergestellten Beschichtungsmittels für die Deckschicht auf die zumindest teilweise ausgehärtete Kratzfestschicht oder eine gegebenenfalls auf der Kratzfestschicht angeordnete Zwischenschicht erfolgt - wie beim Auftragen des Beschichtungsmittels für die Kratzfestschicht (K) - durch Standard-Beschichtungsverfahren wie z. B. Tauchen, Fluten, Streichen, Bürsten, Rakeln, Walzen, Sprühen, Fallfilmauftrag, Spincoating und Schleudern.

Gegebenenfalls nach vorheriger Antrocknung bei Raumtemperatur wird eine Härtung der aufgetragenen Deckschicht (D) durchgeführt. Vorzugsweise erfolgt die Härtung thermisch bei Temperaturen im Bereich von 50 bis 200°C, insbesondere 70 bis 180°C und besonders bevorzugt 90 bis 150°C. Die Aushärtzeit sollte unter diesen Bedingungen 30 bis 200 Minuten, bevorzugt 45 bis 120 Minuten betragen. Die Schichtdicke der gehärteten Deckschicht beträgt vorzugsweise 0,05 bis 5 µm, insbesondere 0,1 bis 3 µm.

Im Fall der Anwesenheit ungesättigter Verbindungen und Photoinitiatoren kann die Härtung auch durch Bestrahlung erfolgen, an die sich gegebenenfalls eine thermische Nachhärtung anschließt.

Die erfindungsgemäßen Schichtsysteme können durch ein Verfahren hergestellt werden, welches mindestens folgende Schritte umfasst:
(a) Aufbringen des Kratzfestschicht-Beschichtungsmittels auf das Substrat (S) und partielles Aushärten oder Polymerisieren des Beschichtungsmittels unter Bedingungen, dass noch reaktive Gruppen vorhanden sind,
(b) Aufbringen des erfindungsgemäßen Deckschicht-Beschichtungsmittels auf die so hergestellte, unvollständig gehärtete oder polymerisierte Kratzfestschicht (K) und Aushärten derselben unter Ausbildung einer Deckschicht (D).

Bei der Herstellung der Schichtsysteme hat es sich als besonders vorteilhaft herausgestellt, wenn die Kratzfestschicht (K) nach dem Auftragen bei einer Temperatur > 110°C, insbesondere 110 bis 130°C, getrocknet wird. Hierdurch lassen sich ausgezeichnete Verschleißeigenschaften der Schichtsysteme erzielen.

Vorteilhaft ist ferner, wenn das Kratzfestschicht-Beschichtungsmittel Verlaufsmittel in einer Menge von 0,01 bis 3 Gew.%, insbesondere von 0,03 bis 1 Gew.%, enthält.

Als besonders vorteilhaft hat sich ferner herausgestellt, wenn das Deckschicht-Beschichtungsmittel bei einer relativen Feuchtigkeit von 50 bis 75 %, insbesondere 55 bis 70 % aufgetragen wird.

Schließlich hat es sich als vorteilhaft herausgestellt, wenn die gehärtete Kratzfestschicht (K) vor dem Auftragen des Deckschicht-Beschichtungsmittels aktiviert wird. Als Aktivierungsverfahren kommen vorzugsweise Coronabehandlung, Beflammung, Plasmabehandlung oder chemisches Anätzen in Frage. Besonders geeignet sind Beflammung und Coronabehandlung. Bezüglich der vorteilhaften Eigenschaften wird auf die Ausführungsbeispiele verwiesen.

Nachfolgend wird die Erfindung anhand von Ausführungsbeispielen weiter erläutert.

### Beispiele

### Herstellung der Beschichtungsmittel für die Kratzfestschicht (K)

### Beispiel 1

203 g Methyltrimethoxysilan wurden vermischt mit 1,25 g Eisessig. 125,5 g Ludox^{®} AS (ammoniumstabilisiertes kolloidales Silicasol der Firma DuPont, 40 % SiO₂ mit einem Silicatteilchendurchmesser von etwa 22 nm und einem pH-Wert von 9,2) wurden verdünnt mit 41,5 g entionisiertem Wasser, um den Gehalt an SiO₂ auf 30 Gew.% einzustellen. Dieses Material wurde dem angesäuerten Methyltrimethoxysilan unter Rühren zuzugegeben. Die Lösung wurde weitere 16 bis 18 Stunden bei Raumtemperatur gerührt und anschließend einem Lösungsmittelgemisch von Isopropanol/n-Butanol im Gewichtsverhältnis 1:1 zugesetzt. Schließlich wurden 32 g des UV-Absorbers 4-[γ-(Tri-(methoxy/ethoxy)silyl)propoxy]-2-hydroxybenzophenon zugegeben. Das Gemisch wurde zwei Wochen bei Raumtemperatur gerührt. Die Zusammensetzung hatte einen Feststoffgehalt von 20 Gew.% und enthielt 11 Gew.% des UV-Absorbers, bezogen auf die Festbestandteile. Die Beschichtungszusammensetzung hatte eine Viskosität von etwa 5 cSt bei Raumtemperatur.

Zur Beschleunigung der Polykondensationsreaktion wurden vor der Applikation 0,2 Gew.% Tetrabutylammoniumacetat homogen untergemischt.

### Beispiel 2 (Primer)

3,0 Teile Polymethylmethacrylat (Elvacite^{®} 2041 der Firma DuPont) wurde mit 15 Teilen Diacetonalkohol und 85 Teilen Propylenglykolmonomethylether gemischt und zwei Stunden lang bei 70°C bis zum vollständigen Lösen gerührt.

### Beispiel 3

Dem nach Beispiel 4 hergestellten Beschichtungssol wurden 0,4 Gew.% eines Silicon-Verlaufsmittels sowie 0,3 Gew.% eines Acrylatpolyols, nämlich Joncryl 587 (Mₙ 4300) der Firma S.C. Johnson Wax Company in Racine, Wisconsin untergerührt. Zur Beschleunigung der Polykondensationsreaktion wurden, wie in Beispiel 4 vor der Applikation, 0,2 Gew.% Tetra-n-butylammoniumacetat homogen untergemischt.

### Herstellung der Beschichtungsmittel für die Deckschicht (D)

### Beispiel 4

Zu einer Mischung aus 200,0 g TEOS, 22,0 g MTS in 130,0 g 2-Propanol wurde eine Mischung aus 130,0 g 2-Propanol, 159,4 g destilliertes Wasser und 2,8 g 37 %-ige Salzsäure schnell hinzugetropft. Es tritt eine exotherme Reaktion auf, die durch Erwärmen auf 30 bis 40°C unterstützt wird. Dann wird das Reaktionsprodukt auf Raumtemperatur abgekühlt und 1,5 Stunden gerührt. Das erhaltene Beschichtungssol wird bei + 4°C kühl gelagert. Vor der Anwendung wird dieses Konzentrat auf 1 Gew.% Feststoffgehalt mit Isopropanol verdünnt und 1,0 Gew.% Verlaufsmittel BYK^{®} 347 (bezogen auf den Feststoffgehalt) hinzugegeben.

### Beispiel 5

Zu einer Mischung aus 200,0 g TEOS 22,0 g MPTS bzw. 11,0 g MPTS (Beispiel 26 und 29) in 130,0 g 2-Propanol wurde eine Mischung aus 130,0 g 2-Propanol 155,5 g bzw. 150,4 g destilliertes Wasser und 2,8 g 37 %-ige Salzsäure schnell hinzugetropft. Es tritt eine exotherme Reaktion auf, die durch Erwärmen auf 30 bis 40°C unterstützt wird. Dann wird das Reaktionsprodukt auf Raumtemperatur abgekühlt und 1,5 Stunden gerührt. Das erhaltene Beschichtungssol wird bei + 4°C kühl gelagert. Vor der Anwendung wird dieses Konzentrat auf 1 Gew.% Feststoffgehalt mit Isopropanol verdünnt und 1,0 Gew.% Verlaufsmittel BYK^{®} 306 (bezogen auf den Feststoffgehalt) hinzugegeben.

### Beispiel 6

Zu einer Mischung aus 200,0 g TEOS, 22,0 g GPTS in 130,0 g 2-Propanol wurde eine Mischung aus 130,0 g 2-Propanol 156,8 g destilliertes Wasser und 2,8 g 37 %-ige Salzsäure schnell hinzugetropft. Es tritt eine exotherme Reaktion auf, die durch Erwärmen auf 30 bis 40°C unterstützt wird. Dann wird das Reaktionsprodukt auf Raumtemperatur abgekühlt und 1,5 Stunden gerührt. Das erhaltene Beschichtungssol wird bei + 4°C kühl gelagert. Vor der Anwendung wird dieses Konzentrat auf 1 Gew.% Feststoffgehalt mit Isopropanol verdünnt und 1,0 Gew.% Verlaufsmittel BYK 347 (bezogen auf den Feststoffgehalt) hinzugegeben.

### Herstellung der Kratzfestbeschichtungssysteme

Mit den erhaltenen Beschichtungsmitteln wurden Teststücke wie folgt hergestellt:

Platten aus Polycarbonat auf Basis Bisphenol A (Tg = 147°C, M_{w} 27500) mit den Maßen 105 x 150 x 4 mm wurden mit Isopropanol gereinigt und gegebenenfalls durch Fluten mit einer Primerlösung geprimert. Dabei wird die Primerlösung (Beispiel 2) nur angetrocknet.

Anschließend wurden die geprimerten Polycarbonatplatten mit dem Basecoat-Beschichtungsmittel (Beispiel 1 bzw. 3) geflutet. Die Abluftzeit zur Staubtrocknung betrug 30 Minuten bei 23°C und 63 % relative Luftfeuchte. Die staubtrockenen Platten wurden in einem Ofen bei 130°C und 30 Minuten lang erwärmt und danach auf Raumtemperatur abgekühlt.

Danach erfolgte das Aufbringen des Deckschicht-Beschichtungsmittels (Beispiel 4, 5 bzw. 6) ebenfalls durch Fluten. Der nasse Film wurde 30 Minuten bei 23°C und 63 % relativer Luftfeuchte abgelüftet und die Platten anschließend 120 Minuten bei 130°C erhitzt.

Bei Verwendung des primerfreien Basecoats 3 fiel die Primerstufe weg. Die Polycarbonatplatten werden hier direkt nach der Reinigung mit Isopropanol mit dem Beschichtungsmittel des Beispiels 2 geflutet. Die übrigen Bedingungen sind analog.

Als besonders günstig zur Verbesserung der Haftung und dem Verlauf des Topcoat Beschichtungsmittels hat sich eine Oberflächenaktivierung der ausgehärteten Basecoat-Schicht durch Beflammung, Corona-Behandlung, Bürsten oder chemisches Anätzen etc. erwiesen. Weiterhin wurden zum Vergleich die Aushärtungszeit sowie der Gehalt des verwendeten Verlaufsmittels variiert.

Die beschichteten Platten wurden nach erfolgter Aushärtung zwei Tage bei Raumtemperatur gelagert und dann den folgenden definierten Prüfungen unterzogen.

Die Eigenschaften der mit diesen Lacken erhaltenen Überzüge wurden wie folgt bestimmt:
- Gitterschnittprüfung: EN ISO 2409:1994
- Gitterschnittprüfung nach Wasserlagerung: 65°C, tt = 0/0 Die lackierten Platten werden nach EN ISO 2409:1994 mit einem Gitterschnitt versehen und in 65°C heißem Wasser gelagert. Registriert wird die Lagerzeit (Tage), ab der der erste Haftungsverlust im Tape Test von 0 nach 2 auftritt.
- Taber-Abraser-Test: Verschleißprüfung DIN 52 347; (1000 Zyklen, CS10F, 500 g)

Die Beurteilungsergebnisse sind in den folgenden Tabellen dargestellt:

In Tabelle 1 sind die Verschleiß- (Taber-Werte) und Haftungseigenschaften bei Wasserlagerung der Schichtsysteme in Abhängigkeit der Kratzfestschicht (K) mit und ohne Deckschicht dargestellt. Beispiele 7 und 8 zeigen eine erhebliche Verbesserung der Kratzfestigkeit ohne Verlust der Haftung bei Wasserlagerung.

**Tabelle 1**

| | **Kratzfestschicht** | **Deckschicht** | **Taber-Abraser-Test Eintrübung** | **Gitterschnitt-Test nach** |
|---|---|---|---|---|
| | | | **(%)** | **Wasserlagerung** |
| | **(K)** | **(D)** | | **(Tage)** |
| **Beispiel 7** | **Beispiel 1/2** | **Beispiel 4** | **2,4** | **> 14** |
| **Beispiel 8** | **Beispiel 3** | **Beispiel 4** | **2,9** | **> 14** |
| **Vergleichsbeispiel 9** | **Beispiel 1/2** | **ohne** | **12** | **> 14** |
| **Vergleichsbeispiel 10** | **Beispiel 3** | **ohne** | **20** | **> 10** |

In Tabelle 2 sind die Verschleißeigenschaften (Taber-Werte) der Schichtsysteme in Abhängigkeit von der Einbrennzeit und -temperatur der Kratzfestschicht (K) dargestellt. Die Ergebnisse zeigen, dass mit Erhöhung der Einbrennzeit eine Verbesserung der Taber-Werte einhergeht.

**Tabelle 2**

| | **Kratzfestschicht** | **Deckschicht** | **Einbrenntemperatur nach Applikation des Basecoats** | **Einbrennzeit nach Applikation des Basecoats** | **Taber-Abraser-Test Eintrübung** |
|---|---|---|---|---|---|
| | **(K)** | **(D)** | **(°C)** | **(Min.)** | **(%)** |
| **Beispiel 11** | **Beispiel 1/2** | **Beispiel 4** | **130** | **60** | **2,4** |
| **Beispiel 12** | **Beispiel 1/2** | **Beispiel 4** | **130** | **30** | **5,7** |
| **Beispiel 13** | **Beispiel 3** | **Beispiel 4** | **130** | **60** | **2,9** |
| **Beispiel 14** | **Beispiel 3** | **Beispiel 4** | **130** | **45** | **10,8** |
| **Beispiel 15** | **Beispiel 3** | **Beispiel 4** | **130** | **30** | **8,8** |
| **Beispiel 16** | **Beispiel 3** | **Beispiel 4** | **130** | **15** | **14,3** |
| **Beispiel 17** | **Beispiel 1/2** | **Beispiel 4** | **127** | **15** | **15,5** |
| **Beispiel 18** | **Beispiel 1/2** | **Beispiel 4** | **127** | **30** | **11,1** |
| **Beispiel 19** | **Beispiel 1/2** | **Beispiel 4** | **127** | **45** | **5,0** |

In Tabelle 3 sind die Verschleißeigenschaften (Taber-Werte) der Schichtsysteme in Abhängigkeit vom Feststoffgehalt der Deckschicht (D) dargestellt. Die Ergebnisse zeigen, dass besonders gute Taber-Werte erzielt werden, wenn der Feststoffgehalt der Deckschicht über 0,5 und unter 1,5 Gew.% liegt.

**Tabelle 3**

| | **Kratzfestschicht** | **Deckschicht** | **Feststoffgehalt des Topcoats** | **Taber-Abraser-Test Eintrübung** |
|---|---|---|---|---|
| | **(K)** | **(D)** | | **(%)** |
| **Beispiel 20** | **Beispiel 3** | **Beispiel 4** | **1,0** | **2,9** |
| **Beispiel 21** | **Beispiel 3** | **Beispiel 4** | **0,8** | **2,1** |
| **Beispiel 22** | **Beispiel 3** | **Beispiel 4** | **1,5** | **keine Haftung** |
| **Beispiel 23** | **Beispiel 3** | **Beispiel 4** | **2,0** | **keine Haftung** |
| **Beispiel 24** | **Beispiel 3** | **Beispiel 4** | **0,5** | **15,7** |
| **Beispiel 25** | **Beispiel 1/2** | **Beispiel 4** | **1,0** | **2,4** |

In Tabelle 4 sind die Verschleißeigenschaften (Taber-Werte) der Schichtsysteme in Abhängigkeit von Art und Menge des im Deckschicht-Beschichtungsmittel enthaltenen Flexibilisators dargestellt. Als Flexibilistoren wurden eingesetzt: Glycidyloxypropyltrimethoxysilan (GPTS), Methyltriethoxysilan (MTS) und Methacryloxypropyltrimethoxysilan (MPTS).

**Tabelle 4**

| | **Kratzfestschicht** | **Deckschicht** | **Flexibilisator im Topcoat** | | **Taber-Abraser-Test Eintrübung** |
|---|---|---|---|---|---|
| | | | **Art** | **Gehalt** | |
| | **(K)** | **(D)** | | **(%)** | **(%)** |
| **Beispiel 26** | **Beispiel 1/2** | **Beispiel 5** | **MPTS** | **5** | **2,1** |
| **Beispiel 27** | **Beispiel 1/2** | **Beispiel 5** | **MPTS** | **10** | **4.5** |
| **Beispiel 28** | **Beispiel 3** | **Beispiel 5** | **MPTS** | **10** | **7,3** |
| **Beispiel 29** | **Beispiel 3** | **Beispiel 5** | **MPTS** | **5** | **2,3** |
| **Beispiel 30** | **Beispiel 3** | **Beispiel 4** | **MTS** | **10** | **2,9** |
| **Beispiel 31** | **Beispiel 3** | **Beispiel 6** | **GPTS** | **10** | **3,0** |

In Tabelle 5 sind die Verschleißeigenschaften (Taber-Werte) der Schichtsysteme in Abhängigkeit der Konzentration der Verlaufsmittelmenge von BYK 306 im Deckschicht-Beschichtungsmittel dargestellt. Die Ergebnisse zeigen, dass sich das Verlaufsmittel BYK 306 in einer Menge von weniger als etwa 1 Gew.% im Deckschicht-Beschichtungsmittel besonders vorteilhaft auf die Verschleißeigenschaften des Schichtsystems auswirken.

**Tabelle 5**

| | **Kratfestschicht** | **Deckschicht** | **Verlaufsmittelmenge** | **Taber-Abrasser-Test Eintrübung** |
|---|---|---|---|---|
| | | | **(%)** | |
| | **(K)** | **(D)** | | **(%)** |
| **Beispiel 32** | **Beispiel 1/2** | **Beispiel 4** | **0,5** | **3,6** |
| **Beispiel 33** | **Beispiel 1/2** | **Beispiel 4** | **0,3** | **2,1** |
| **Beispiel 34** | **Beispiel 3** | **Beispiel 4** | **0,5** | **5,5** |
| **Beispiel 35** | **Beispiel 3** | **Beispiel 4** | **0,3** | **2,9** |

## Patentansprüche

1. Schichtsystem enthaltend
(1) ein Substrat (S),
(2) eine Kratzfestschicht (K), erhältlich durch mindestens teilweises Aushärten eines Beschichtungsmittels enthaltend ein nach dem Sol-Gel-Verfahren hergestelltes Polykondensat auf Basis mindestens eines Silans und
(3) eine Deckschicht (D), erhältlich durch mindestens teilweise Aushärten eines Beschichtungsmittels erhältlich durch Hydrolyse von
(a) einer oder mehreren Verbindungen der allgemeinen Formel I
M(R')ₘ (I)
worin M ein Element oder eine Verbindung ausgewählt aus der Gruppe bestehend aus Si, Ti, Zr, Sn, Ce, Al, B, VO, In und Zn ist, R' einen hydrolysierbaren Rest darstellt und m eine ganze Zahl von 2 bis 4 ist, allein oder gemeinsam mit
(b) einer oder mehreren Verbindungen der allgemeinen Formel II
R_{b}SiR'ₐ, (II)
worin die Reste R' und R gleich oder verschieden sind, R' wie oben definiert ist, R eine Alkylgruppe, eine Alkenylgruppe, eine Arylgruppe oder eine Kohlenwasserstoffgruppe mit einem oder mehreren Halogengruppen, eine Epoxygruppe, eine Glycidyloxygruppe eine Aminogruppe, eine Mercaptogruppe eine Methacryloxygruppe oder eine Cyanogruppe darstellt und a und b unabhängig voneinander die Werte 1 bis 3 annehmen, wobei die Summe von a und b gleich vier ist.

2. Schichtsystem nach Anspruch 1, **dadurch gekennzeichnet, dass** das Substrat (S) aus Kunststoff, insbesondere auf Basis von Polycarbonat, besteht.

3. Schichtsystem nach einem der vorangegangenen Ansprüche, **dadurch gekennzeichnet, dass** das Beschichtungsmittel für die Kratzfestschicht (K) ein Polykondensat auf Basis von Methylsilan ist.

4. Schichtsystem nach einem der vorangegangenen Ansprüche, **dadurch gekennzeichnet, dass** das Beschichtungsmittel für die Kratzfestschicht (K) ein nach dem Sol-Gel-Verfahren hergestelltes Polykondensat aus im wesentlichen 10 bis 70 Gew.% Kieselsol und 30 bis 90 Gew.% eines teilweise kondensierten Organoalkoxysilans in einem wässrig/organischen Lösungsmittelgemisch umfasst.

5. Schichtsystem nach einem der vorangegangenen Ansprüche, **dadurch gekennzeichnet, dass** das Beschichtungsmittel für die Kratzfestschicht (K) ein Polykondensat auf Basis von mindestens einem Silylacrylat ist.

6. Schichtsystem nach einem der vorangegangenen Ansprüche, **dadurch gekennzeichnet, dass** das Beschichtungsmittel für die Kratzfestschicht (K) Methacryloxypropyltrimethoxysilan und AlO(OH)-Nanopartikel umfasst.

7. Schichtsystem nach einem der vorangegangenen Ansprüche, **dadurch gekennzeichnet, dass** das Beschichtungsmittel für die Kratzfestschicht (K) ein Polykondensat auf Basis von mindestens einem multifunktionellen cyclischen Organosiloxan ist.

8. Schichtsystem nach einem der vorangegangenen Ansprüche, **dadurch gekennzeichnet, dass** die Hydrolyse zur Herstellung des Beschichtungsmittels für die Deckschicht (D) in Gegenwart von mindestens 0,6 Mol Wasser, bezogen auf 1 Mol hydrolysierbare Reste R', durchgeführt wird.

9. Schichtsystem nach einem der vorangegangenen Ansprüche, **dadurch gekennzeichnet, dass** zur Herstellung des Beschichtungsmittels für die Deckschicht die Verbindung der Formel II in einer Menge von weniger als 0,7 Mol, insbesondere weniger als 0,5 Mol, bezogen auf 1 Mol der Verbindung der Formel I, eingesetzt wird.

10. Schichtsystem nach einem der vorangegangenen Ansprüche, **dadurch gekennzeichnet, dass** die Hydrolyse zur Herstellung des Beschichtungsmittels für die Deckschicht (D) bei einem pH-Wert kleiner als 6,0 durchgeführt wird.

11. Schichtsystem nach einem der vorangegangenen Ansprüche, **dadurch gekennzeichnet, dass** der Feststoffgehalt der hergestellten Beschichtungszusammensetzung für die Deckschicht (D) 0,2 bis 15 %, insbesondere 0,5 bis 5 Gew.%, beträgt.

12. Schichtsystem nach einem der vorangegangenen Ansprüche, **dadurch gekennzeichnet, dass** die Hydrolyse zur Herstellung des Beschichtungsmittels für die Deckschicht (D) in Gegenwart von Wasser, eines Alkohols mit einem Siedepunkt unter 120°C und/oder Alkoxyalkohols, insbesondere Isopropanol, Ethanol und/oder Butanol als Lösungsmittel durchgeführt wird.

13. Schichtsystem nach einem der vorangegangenen Ansprüche, **dadurch gekennzeichnet, dass** in Formel (I) M ausgewählt ist aus der Gruppe bestehend aus Si, Ti, Zr, Sn und Ce und m = 4 ist.

14. Schichtsystem nach einem der vorangegangenen Ansprüche, **dadurch gekennzeichnet, dass** in Formel (I) M ausgewählt ist aus der Gruppe bestehend aus Al, B, VO und In und m = 3 ist.

15. Schichtsystem nach einem der vorangegangenen Ansprüche, **dadurch gekennzeichnet, dass** in Formel (I) M = Zn und m = 2 ist.

16. Schichtsystem nach einem der vorangegangenen Ansprüche, **dadurch gekennzeichnet, dass** der hydrolysierbare Rest R' in Formel (I) und/oder (II) ausgewählt ist aus der Gruppe bestehend aus Halogenen wie F, Cl, Br und I, C₁₋₄ -Alkoxy wie Methoxy, Ethoxy, n-Propoxy, i-Propoxy und n-Butoxy, i-Butoxy, sec-Butoxy oder tert.-Butoxy), C₆₋₁₀-Aryloxy wie Phenoxy, C₁₋₄-Acyloxy wie Acetoxy und Propionyloxy und Alkylcarbonyl wie Acetyl.

17. Schichtsystem nach einem der vorangegangenen Ansprüche, **dadurch gekennzeichnet, dass** als Verbindung der Formel I ein Tetraalkoxysilan, insbesondere Tetraethoxysilan (TEOS) eingesetzt wird.

18. Schichtsystem nach einem der vorangegangenen Ansprüche, **dadurch gekennzeichnet, dass** als Verbindung der Formel II Glycidyloxypropyltrimethoxysilan (GPTS), Methyltriethoxysilan (MTS) und/oder Methacryloxypropyltrimethoxysilan (MPTS) eingesetzt wird.

19. Schichtsystem nach einem der vorangegangenen Ansprüche, **dadurch gekennzeichnet, dass** zur Herstellung des Beschichtungsmittels für die Deckschicht (D) nach Beendigung der Hydrolyse mindestens ein Additiv, insbesondere aus der Gruppe der Verlaufsmittel, Farbstoffe, Stabilisatoren und anorganischen Füllstoffe, zugesetzt und/oder das Hydrolysat mit Alkoholen, Wasser und/oder Alkoxyalkoholen auf eine Konzentration an Beschichtungsmitteln von 0,02 bis 15 Gew.%, insbesondere 0,5 bis 5 Gew.%, verdünnt wird.

20. Schichtsystem nach einem der vorangegangenen Ansprüche, **dadurch gekennzeichnet, dass** die Kratzfestschicht (K) eine Dicke von 0,5 bis 30 µm aufweist.

21. Schichtsystem nach einem der vorangegangenen Ansprüche, **dadurch gekennzeichnet, dass** die Deckschicht (D) eine Dicke von 0,1 bis 3,0 µm aufweist.

22. Schichtsystem nach einem der vorangegangenen Ansprüche, **dadurch gekennzeichnet, dass** als weitere Schicht eine Primerschicht (P) vorgesehen ist.

23. Verfahren zur Herstellung eines Schichtsystems nach einem der Ansprüche 1 bis 23, **gekennzeichnet durch** folgende Schritte:
(a) Aufbringen eines in einem der Ansprüche 1 bis 23 definierten Beschichtungsmittels für die Kratzfestschicht (K) auf das Substrat (S) und mindestens teilweises Aushärten oder Polymerisieren des Beschichtungsmittels unter Bedingungen, dass noch reaktive Gruppen vorhanden sind,
(b) Aufbringen eines in einem der Ansprüche 1 bis 23 definierten Beschichtungsmittels für die Deckschicht (D) auf die so hergestellte, Kratzfestschicht (K) und mindestens teilweises Aushärten derselben unter Ausbildung einer Deckschicht (D).

24. Verfahren nach Anspruch 24, **dadurch gekennzeichnet, dass** die Kratzfestschicht (K) nach dem Auftragen bei einer Temperatur > 110°C, insbesondere 110 bis 130°C, getrocknet wird.

25. Verfahren nach Anspruch 24 oder 25, **dadurch gekennzeichnet, dass** das Beschichtungsmittel für die Kratzfestschicht (K) Verlaufsmittel in einer Menge von 0,01 bis 3,0 Gew.%, insbesondere 0,03 bis 1,0 Gew.% enthält.

26. Verfahren nach einem der Ansprüche 24 bis 26, **dadurch gekennzeichnet, dass** das Beschichtungsmittel für die Deckschicht (D) bei einer relativen Feuchtigkeit von 50 bis 75 %, insbesondere 55 bis 70 % aufgetragen wird.

27. Verfahren nach einem der Ansprüche 24 bis 27, **dadurch gekennzeichnet, dass** die durchgehärtete Kratzfestschicht (K) vor dem Auftragen des Deckschicht-Beschichtungsmittels aktiviert wird, vorzugsweise durch Coronabehandlung oder Beflammung.

28. Verfahren nach einem der Ansprüche 24 bis 28, **dadurch gekennzeichnet, dass** auf das Substrat (S) eine Primerschicht (P) aufgebracht wird.

## Claims

1. Layer system comprising
(1) a substrate (S),
(2) a scratch-resistant layer (SR) obtainable by at least partial curing of a coating composition comprising a polycondensate, prepared by the sol-gel process, based on at least one silane and
(3) a top layer (T) obtainable by at least partial curing of a coating composition obtainable by hydrolysis of
(a) one or more compounds of the general formula I
M(R')ₘ (I)
wherein M is an element or a compound chosen from the group consisting of Si, Ti, Zr, Sn, Ce, Al, B, VO, In and Zn, R' represents a hydrolysable radical and m is an integer from 2 to 4, by themselves or together with
(b) one or more compounds of the general formula II
R_{b}SiR'ₐ, (II)
wherein the radicals R' and R are identical or different, R' is as defined above, R represents an alkyl group, an alkenyl group, an aryl group or a hydrocarbon group with one or more halogen groups, an epoxide group, a glycidyloxy group, an amino group, a mercapto group, a methacryloxy group or a cyano group and a and b independently of one another assume the values 1 to 3, wherein the sum of a and b is four.

2. Layer system according to claim 1, **characterized in that** the substrate (S) is made of plastic, in particular based on polycarbonate.

3. Layer system according to one of the preceding claims, **characterized in that** the coating composition for the scratch-resistant layer (SR) is a polycondensate based on methylsilane.

4. Layer system according to one of the preceding claims, **characterized in that** the coating composition for the scratch-resistant layer (SR) comprises a polycondensate, prepared by the sol-gel process, of substantially 10 to 70 wt.% silica sol and 30 to 90 wt.% of a partly condensed organoalkoxysilane in an aqueous/organic solvent mixture.

5. Layer system according to one of the preceding claims, **characterized in that** the coating composition for the scratch-resistant layer (SR) is a polycondensate based on at least one silyl acrylate.

6. Layer system according to one of the preceding claims, **characterized in that** the coating composition for the scratch-resistant layer (SR) comprises methacryloxypropyltrimethoxysilane and AlO (OH) nanoparticles.

7. Layer system according to one of the preceding claims, **characterized in that** the coating composition for the scratch-resistant layer (SR) is a polycondensate based on at least one multifunctional cyclic organosiloxane.

8. Layer system according to one of the preceding claims, **characterized in that** the hydrolysis for the preparation of the coating composition for the top layer (T) is carried out in the presence of at least 0.6 mol of water, based on 1 mol of hydrolysable radicals R'.

9. Layer system according to one of the preceding claims, **characterized in that** for the preparation of the coating composition for the top layer, the compound of the formula II is employed in an amount of less than 0.7 mol, in particular less than 0.5 mol, based on 1 mol of the compound of the formula I.

10. Layer system according to one of the preceding claims, **characterized in that** the hydrolysis for the preparation of the coating composition for the top layer (T) is carried out at a pH of less than 6.0.

11. Layer system according to one of the preceding claims, **characterized in that** the solids content of the coating composition prepared for the top layer (T) is 0.2 to 15%, in particular 0.5 to 5 wt.%.

12. Layer system according to one of the preceding claims, **characterized in that** the hydrolysis for the preparation of the coating composition for the top layer (T) is carried out in the presence of water, an alcohol having a boiling point below 120°C and/or an alkoxy-alcohol, in particular isopropanol, ethanol and/or butanol as the solvent.

13. Layer system according to one of the preceding claims, **characterized in that** in formula (I) M is chosen from the group consisting of Si, Ti, Zr, Sn and Ce and m = 4.

14. Layer system according to one of the preceding claims, **characterized in that** in formula (I) M is chosen from the group consisting of Al, B, VO and In and m = 3.

15. Layer system according to one of the preceding claims, **characterized in that** in formula (I) M = Zn and m = 2.

16. Layer system according to one of the preceding claims, **characterized in that** the hydrolysable radical R' in formula (I) and/or (II) is chosen from the group consisting of halogens, such as F, Cl, Br and I, C₁₋₄ - alkoxy, such as methoxy, ethoxy, n-propoxy, i-propoxy and n-butoxy, i-butoxy, sec-butoxy or tert-butoxy, C₆₋₁₀-aryloxy, such as phenoxy, C₁₋₄-acyloxy, such as acetoxy and propionyloxy, and alkylcarbonyl, such as acetyl.

17. Layer system according to one of the preceding claims, **characterized in that** a tetraalkoxysilane, in particular tetraethoxysilane (TEOS), is employed as the compound of the formula I.

18. Layer system according to one of the preceding claims, **characterized in that** glycidyloxypropyltrimethoxysilane (GPTS), methyltriethoxysilane (MTS) and/or methacryloxypropyltrimethoxysilane (MPTS) is employed as the compound of the formula II.

19. Layer system according to one of the preceding claims, **characterized in that** for the preparation of the coating composition for the top layer (T), when the hydrolysis has ended at least one additive, in particular from the group consisting of flow control agents, dyestuffs, stabilizers and inorganic fillers, is added and/or the hydrolysis product is diluted with alcohols, water and/or alkoxy-alcohols to a concentration in the coating compositions of 0.02 to 15 wt.%, in particular 0.5 to 5 wt.%.

20. Layer system according to one of the preceding claims, **characterized in that** the scratch-resistant layer (SR) has a thickness of 0.5 to 30 µm.

21. Layer system according to one of the preceding claims, **characterized in that** the top layer (T) has a thickness of 0.1 to 3.0 µm.

22. Layer system according to one of the preceding claims, **characterized in that** a primer layer (P) is provided as a further layer.

23. Process for the preparation of a layer system according to one of claims 1 to 23, **characterized by** the following steps:
(a) application of a coating composition, defined in one of claims 1 to 23, for the scratch-resistant layer (SR) to the substrate (S) and at least partial curing or polymerization of the coating composition under conditions such that reactive groups are still present,
(b) application of a coating composition, defined in one of claims 1 to 23, for the top layer (T) to the scratch-resistant layer (SR) prepared in this way and at least partial curing thereof to form a top layer (T).

24. Process according to claim 24, **characterized in that** the scratch-resistant layer (SR) is dried at a temperature of >110°C, in particular 110 to 130°C, after the application.

25. Process according to claim 24 or 25, **characterized in that** the coating composition for the scratch-resistant layer (SR) comprises flow control agents in an amount of 0.01 to 3.0 wt.%, in particular 0.03 to 1.0 wt.%.

26. Process according to one of claims 24 to 26, **characterized in that** the coating composition for the top layer (T) is applied at a relative humidity of 50 to 75%, in particular 55 to 70%.

27. Process according to one of claims 24 to 27, **characterized in that** the cured scratch-resistant layer (SR) is activated, preferably by corona treatment or flaming, before application of the top layer coating composition.

28. Process according to one of claims 24 to 28, **characterized in that** a primer layer (P) is applied to the substrate (S).

## Revendications

1. Système stratifié contenant
(1) un substrat (S),
(2) une couche résistant à l'éraflage (K) obtenue par durcissement au moins partiel d'un produit de revêtement contenant un polycondensat à base d'au moins un silane, lui-même préparé par le procédé par sol-gel et
(3) une couche de couverture (D) obtenue par durcissement au moins partiel d'un produit de revêtement obtenu par hydrolyse de
(a) un ou plusieurs composés de formule générale I
M(R')ₘ (I)
dans laquelle M représente un élément ou un composé choisi dans le groupe consistant en Si, Ti, Zr, Sn, Ce, Al, B, VO, In et Zn, R' représente un groupe hydrolysable et m est un nombre entier allant de 2 à 4, seuls ou avec
(b) un ou plusieurs composés de formule générale II
R_{b}SiR'ₐ (II)
dans laquelle R' et R ont des significations identiques ou différentes, R' ayant été défini ci-dessus et R représentant un groupe alkyle, un groupe alcényle, un groupe aryle, ou un groupe hydrocarboné contenant un ou plusieurs motifs halogénés, un groupe époxy, un groupe glycidyloxy, un groupe amino, un groupe mercapto, un groupe méthacryloxy ou un groupe cyano, et a et b sont égaux chacun, indépendamment l'un de l'autre, à un nombre allant de 1 à 3, la somme de a et b étant égale à 4.

2. Système stratifié selon la revendication 1, **caractérisé en ce que** le substrat (S) consiste en résine synthétique, en particulier à base de polycarbonate.

3. Système stratifié selon l'une des revendications qui précèdent, **caractérisé en ce que** le produit de revêtement utilisé pour la couche résistant à l'éraflage (K) est un polycondensat à base de méthylsilane.

4. Système stratifié selon l'une des revendications qui précèdent, **caractérisé en ce que** le produit de revêtement utilisé pour la couche résistant à l'éraflage (K) est un polycondensat, préparé par le procédé par sol-gel, consistant essentiellement en 10 à 70 % en poids de sol de silice et 30 à 90 % en poids d'un organoalcoxysilane partiellement condensé dans un mélange solvant aqueux/organique.

5. Système stratifié selon l'une des revendications qui précèdent, **caractérisé en ce que** le produit de revêtement utilisé pour la couche résistant à l'éraflage (K) est un polycondensat à base d'au moins un silylacrylate.

6. Système stratifié selon l'une des revendications qui précèdent, **caractérisé en ce que** le produit de revêtement utilisé pour la couche résistant à l'éraflage (K) comprend du méthacryloxypropyltriméthoxysilane et des nanoparticules d'AlO(OH).

7. Système stratifié selon l'une des revendications qui précèdent, **caractérisé en ce que** le produit de revêtement utilisé pour la couche résistant à l'éraflage (K) est un polycondensat à base d'au moins un organosiloxane cyclique multifonctionnel.

8. Système stratifié selon l'une des revendications qui précèdent, **caractérisé en ce que** l'hydrolyse servant à la préparation du produit de revêtement destiné à la couche de couverture (D) est réalisée en présence d'au moins 0,6 mol d'eau pour 1 mol des groupes hydrolysables R'.

9. Système stratifié selon l'une des revendications qui précèdent, **caractérisé en ce que**, pour la préparation du produit de revêtement destiné à la couche de couverture, on met en oeuvre le composé de formule II en quantité inférieure à 0,7 mol, plus spécialement inférieure à 0,5 mol, pour 1 mol du composé de formule I.

10. Système stratifié selon l'une des revendications qui précèdent, **caractérisé en ce que** l'hydrolyse pour préparation du produit de revêtement destiné à la couche de couverture (D) est réalisée à un pH inférieur à 6,0.

11. Système stratifié selon l'une des revendications qui précèdent, **caractérisé en ce que** la teneur en matières solides de la composition de revêtement préparée pour la couche de couverture (D) est de 0,2 à 15 %, plus spécialement de 0,5 à 5 % en poids.

12. Système stratifié selon l'une des revendications qui précèdent, **caractérisé en ce que** l'hydrolyse servant à la préparation du produit de revêtement destiné à la couche de couverture (D) est réalisée en présence d'un solvant consistant en eau, un alcool bouillant au-dessous de 120°C et/ou un alcoxyalcool, en particulier l'isopropanol, l'éthanol et/ou le butanol.

13. Système stratifié selon l'une des revendications qui précèdent, **caractérisé en ce que**, dans la formule I, M est choisi dans le groupe consistant en Si, Ti, Zr, Sn et Ce, et m = 4.

14. Système stratifié selon l'une des revendications qui précèdent, **caractérisé en ce que**, dans la formule (I), M est choisi dans le groupe consistant en Al, B, VO et In et m = 3.

15. Système stratifié selon l'une des revendications qui précèdent, **caractérisé en ce que**, dans la formule I, M représente Zn et m = 2.

16. Système stratifié selon l'une des revendications qui précèdent, **caractérisé en ce que** le groupe hydrolysable R' de la formule (I) et/ou (II) consiste en fait en un halogène choisi parmi F, Cl, Br et I, ou est choisi parmi les groupes alcoxy en C₁-C₄ tels que méthoxy, éthoxy, n-propoxy, isopropoxy et n-butoxy, isobutoxy, sec-butoxy ou tert.-butoxy, les groupes aryloxy en C₆-C₁₀ tels que phénoxy, les groupes acyloxy en C₁-C₄ tels qu'acétoxy et propionyloxy et les groupes alkylcarbonyle tels qu'acétyle.

17. Système stratifié selon l'une des revendications qui précèdent, **caractérisé en ce que** le composé de formule 1 mis en oeuvre est un tétraalcoxysilane, plus spécialement le tétraéthoxysilane (TEOS).

18. Système stratifié selon l'une des revendications qui précèdent, **caractérisé en ce que** le composé de formule II mis en oeuvre est le glycidyloxypropyltriméthoxysilane (GPTS), le méthyltriéthoxysilane (MTS), et/ou le méthacryloxypropyltriméthoxysilane (MPTS).

19. Système stratifié selon l'une des revendications qui précèdent, **caractérisé en ce que**, pour la préparation du produit de revêtement destiné à la couche de couverture (D) et lorsque l'hydrolyse est terminée, on ajoute au moins un additif, plus spécialement du groupe des agents d'étalement, des colorants, des stabilisants et des matières de charge minérales, et/ou on dilue l'hydrolysat par des alcools, l'eau et/ou des alcoxyalcools jusqu'à une concentration en produit de revêtement de 0,02 à 15 % en poids, plus spécialement de 0,5 à 5 % en poids.

20. Système stratifié selon l'une des revendications qui précèdent, **caractérisé en ce que** la couche résistant à l'éraflage (K) a une épaisseur de 0,5 à 30 µm.

21. Système stratifié selon l'une des revendications qui précèdent, **caractérisé en ce que** la couche de couverture (D) a une épaisseur de 0,1 à 3,0 µm.

22. Système stratifié selon l'une des revendications qui précèdent, **caractérisé en ce que** l'on prévoit une autre couche consistant en une couche d'apprêt (P).

23. Procédé pour la préparation d'un système stratifié selon l'une des revendications 1 à 23, **caractérisé par** les stades opératoires suivants :
(a) application d'un produit de revêtement tel que défini dans l'une des revendications 1 à 23 pour la couche résistant à l'éraflage (K) sur le substrat (S) et durcissement au moins partiel ou polymérisation du produit de revêtement dans des conditions telles qu'il subsiste encore des groupes réactifs présents,
(b) sur la couche résistant à l'éraflage (K) ainsi appliquée, application d'un produit de revêtement tel que défini dans l'une des revendications 1 à 23 pour la couche de couverture (D) et durcissement au moins partiel de ce produit, avec formation d'une couche de couverture (D).

24. Procédé selon la revendication 24, **caractérisé en ce que** la couche résistant à l'éraflage (K) est séchée après l'application à une température supérieure à 110°C, et plus spécialement de 110 à 130°C.

25. Procédé selon la revendication 24 ou 25, **caractérisé en ce que** le produit de revêtement pour la couche résistant à l'éraflage (K) contient un agent d'étalement en quantité de 0,01 à 3,0 % en poids, plus spécialement de 0,03 à 1,0 % en poids.

26. Procédé selon l'une des revendications 24 à 26, **caractérisé en ce que** le produit de revêtement destiné à la couche de couverture (D) est appliqué à une humidité relative de 50 à 75 %, plus spécialement de 55 à 70 %.

27. Procédé selon l'une des revendications 24 à 27, **caractérisé en ce que**, avant application du produit de revêtement destiné à la couche de couverture, la couche résistant à l'éraflage (K), entièrement durcie, est activée, de préférence par traitement à une décharge corona ou par exposition à une flamme.

28. Procédé selon l'une des revendications 24 à 28, **caractérisé en ce que** l'on applique une couche d'apprêt (P) sur le substrat (S).
